# EUROPEAN PATENT APPLICATION

(11) **EP 2 899 987 A1**
(43) Date of publication of application: **29.07.2015**
(21) Application number: 14305091.2
(22) Date of filing: 22.01.2014
(51) Int. Cl.: H04N 21/436, G06F 3/14, H04L 12/28, G10L 19/018, H04N 21/2389, H04N 21/41, H04N 21/43

(54) **Synchronising a reproduction of audio or audio and video content**

(71) Applicant: Thomson Licensing, 92130 Issy-les-Moulineaux (FR)
(72) Inventor: Gries, Ulrich, 30419 Hannover (DE); Baum, Peter Georg, 30539 Hannover (DE); Arnold, Michael, 30916 Isernhagen (DE); Chen, Xiaoming, 30165 Hannover (DE)
(74) Representative: Kurth, Dieter

(57) **Abstract**

For synchronizing at least two devices to playback with regard to a user position the same audio or audio and video content synchronously without to setup each device separately and to launch a reproduction of the content reproduced by a first reproduction device also with a second reproduction device, the use of audio watermarks in audio or audio and video content provided by a media server and a mobile device as e.g. a smartphone, iPhone or phablet to perform the tasks are recommended. A synchronised reproduction of the same audio or audio and video content reproduced by the at least two reproduction devices is performed upon initialisation or a switched on status of the mobile device without a further user request if both reproduction devices reproduce the same content. The recommended system is preferred applicable in a multi room environment with reproduction devices where the content is provided by a media server.

## Description

### FIELD OF THE INVENTION

The invention relates to a method, a system, a mobile device and a media server for synchronising a reproduction of a same audio or audio and video content provided by a media server on at least two reproduction devices or to reproduce content reproduced by a first reproduction device also with a second reproduction device.

### BACKGROUND OF THE INVENTION

It is common to have at home several playback devices in separate rooms, where the devices play back audio and video streams from a common local media server that hosts the content as e.g. a set top box. Time delay between the different playbacks is usually different, due to different connection types and device models, and delay compensation is in most devices not available. To synchronize the devices for playing back the same content, the user has to set up each device separately. It would be desirable to automatically synchronize the different playback devices. It would further be desirable if such synchronization could be achieved at the local media server, so that existing playback devices would not require any modification, and if such synchronization could be achieved in accordance with a user's current position. It would further be desirable to automatically adjust the alignment settings for a user walking through the house from a first room to a second one so that the content reproduced in the first room without a further search will also be reproduced in the second room.

### SUMMARY OF THE INVENTION

It is an aspect of the present invention to synchronise a reproduction of a same audio or audio and video content provided by a media server on at least two reproduction devices. In the context of the present invention, synchronisation means to compensate a delay between audio or audio and video content reproduced by at least two reproduction devices and means also that a second reproduction device shall be controlled to reproduce the same content as reproduced by a first reproduction device.

It is a further aspect of the present invention that the synchronisation of the content as well as controlling a second reproduction device to reproduce the same content as reproduced by a first reproduction device shall be user friendly performed or even automatically without any user commands and with low expenditure.

Furthermore, it is an aspect of the present invention that devices in general already available in a household as e.g. a smartphone, iPhone or phablet shall be used to perform the desired tasks.

According to those aspects, a method, a system, a mobile device and a media server for synchronising a reproduction of a same audio or audio and video content provided by a media server on at least two reproduction devices as determined in independent claims are recommended. Advantageous embodiments of the invention are disclosed in respective dependent claims.

For synchronizing at least two devices to playback with regard to a user position the same audio or audio and video content synchronously without having to setup each reproduction device separately, and for launching a reproduction of the content reproduced by a first reproduction device also with a second reproduction device, the use of audio watermarks in audio or audio and video content provided by a media server and the use of a mobile device as e.g. a smartphone, iPhone, phablet or tablet PC to perform the tasks are recommended.

According to an embodiment of the invention, the use of the audio watermarks to reproduce content reproduced by the first reproduction device also with the second reproduction device is performed upon initialisation or a switched on status of the mobile device without a further user request if the second reproduction device reproduces content different to the content reproduced by the first reproduction device. A synchronised reproduction of the same audio or audio and video content reproduced by the at least two reproduction devices is performed upon initialisation or a switched on status of the mobile device without a further user request if both reproduction devices reproduce the same content.

In case that the second reproduction device should be in a switched off status and according to a further embodiment of the invention, a reproduction is performed upon user request with the mobile device. The mobile device receives watermarked audio signals from the first reproduction device and controls via a wireless interface the media server to reproduce audio or audio and video content reproduced with the first reproduction device also with the second reproduction device upon request and upon selection by a user of the mobile device.

Therefore, different audio watermarks are embedded in audio streams of different audio content or embedded in audio streams of different audio and video content by an audio watermark embedder in the media server providing different content for at least two reproduction devices to reproduce audio content or audio and video content reproduced with the first reproduction device also with the second reproduction device. Identical audio watermarks are embedded in separate audio streams of a same audio or audio and video content by an audio watermark embedder in the media server providing the same content for at least two reproduction devices to synchronise a reproduction of the same audio or audio and video content reproduced by the at least two reproduction devices. The audio watermarks are continuously embedded in the audio streams provided by the media server, so that according to an embodiment of the invention both synchronisation tasks in the meaning of the present invention upon initialisation or a switched on status of the mobile device are performed automatic by the mobile device without any further request by a user. The mobile device is used to synchronise a reproduction of the same audio or audio and video content reproduced by the at least two reproduction devices by receiving watermarked audio signals from the at least two reproduction devices, correlating the watermarks of the at least two reproduction devices with an audio watermark detector with a correlator in the mobile device and generating a control signal indicating the time delay in the audio signals reproduced by the at least two reproduction devices and transmitting the control signal from the mobile device to the media server controlling with the control signal a variable delay buffer in the media server providing the same audio or audio and video content to the at least two reproduction devices with a delay adjusted with the control signal applied to the variable delay buffer for a synchronised reproduction of the same audio or audio and video content. In one embodiment, the method is advantageously performed by using a software application, a so-called APP executed by the mobile device.

The system for synchronising a reproduction of a same audio or audio and video content provided by a media server on at least two reproduction devices by a mobile device comprises a microphone for receiving watermarked audio signals, a microprocessor designed for correlating and thereby detecting watermarks in the watermarked audio signals received via the microphone of the mobile device and designed for generating dependent on the received watermarks a first or a second control signal. Due to audio watermarks in the reproduced audio or audio and video content indicating whether the audio stream belongs to the same or to different content, the microprocessor is able to distinguish between contents and sources of content, so that a synchronisation of the same content or a reproduction of content on a further device will be performed. The microprocessor of the mobile device is connected to a wireless interface for transmitting the first or the second control signal to the media server for providing the content reproduced from a first reproduction device for a second reproduction device or to control a variable delay buffer to synchronise the content reproduced from at least two reproduction devices in parallel. The media server as e.g. a settop box is provided with an audio watermark embedder for synchronising content reproduced by at least two reproduction devices or to provide the same content for a further reproduction device. In one embodiment, the mobile device has a display for visualising a software application configured to synchronise a reproduction of a same audio or audio and video content provided by a media server on the at least two reproduction devices, which in the context of the present invention means that a control element as e.g. a check box or a radio button is provided which according to an embodiment of the present invention initially or in a switched on status of the mobile device is activated for an automatic synchronisation or an automatic reproduction of content reproduced by at least two reproduction devices.

Different audio watermarks are embedded in audio streams of different audio content or embedded in audio streams of different audio and video content by an audio watermark embedder in the media server. A different audio watermark means that individual or distinct audio watermarks are embedded in the content provided for each reproduction device. Content means in the context of the present invention audio or audio and video content as e.g. music or pictures or movies reproduced with sound and a reproduction device is in the context of the present invention a device as e.g. a media renderer reproducing audio or audio and video content via a line or wireless connected with a media server.

An automatic synchronisation with a software application is performed or an automatic reproduction of content reproduced by at least two reproduction devices, as the mobile device is configured to detect audio watermarks in received audio signals, so that a time delay in arrival of audio signals reproduced by at least two reproduction devices reproducing the same content is measureable and used for a synchronised reproduction.

An automatic reproduction of content reproduced by at least two reproduction devices if the second one reproduces a different content is performed as the mobile device continuously detects audio watermarks in audio signals received from a first reproduction device and if the user carrying the mobile device changes the location to a second reproduction device. The mobile device receives an audio watermark deviating from the audio watermark previously detected and directs the media server to switch the content reproduced by the second reproduction device to the content marked or modulated with the previously received audio watermark. That means that without any user request, the content reproduced by a first reproduction device in an automated manner is reproduced by the second reproduction device. That means that an automatic transfer of a program or channel from a first to a second reproduction device is advantageously realised by the present invention.

To also allow control in case the second reproduction device is in a switched off status, the mobile device is provided with a control element to identify the second reproduction device as e.g. the device name or the room where the reproduction device is located.

According to a further embodiment of the invention, the mobile device is configured such that said automatic transfer has to be initiated by a user request and according to a third embodiment, the software application is configured so that an automatic transfer or an automatic transfer initiated upon user request is selectable as a standard procedure provided by the software application of the mobile device.

The individual audio watermark embedded in the audio or audio and video signal provided by the media server comprises a pattern including a mark symbol at an individual position for each sound source within said pattern or different mark symbols at the same position, or a combination of both as well as zero symbols are used as individual audio watermark and pattern respectively. A real-time synchronisation is performed by comparing delays of arrival between said mark symbols received from loudspeakers of at least two reproduction devices in the receiving device. Using a specific watermark pattern for synchronising an audio or audio and video content is recommended for a low load of a processor of the receiving device. A watermark consists of a block ofone or more patterns of a predetermined length, where the length of the half of a block in the time domain should be larger than a maximum time delay difference from two sound sources at a user position. A watermark pattern comprises one or more base patterns. Different watermark patterns are constructed such that for each block position, each non-zero base pattern is present at most once. Only a zero base pattern may be present several times. The number of base pattern is chosen dependent on an available power of the processor of the receiving device, acceptable power consumption and the number of sound sources. Due to its distribution in the watermarks of the audio signal, each base pattern has a predetermined length as e.g. 16k samples and should be orthogonal to all other base patterns. Orthogonal means in this context that the correlation is as low as possible or in other words, that the patterns are as much as possible or at least sufficient different so that they will be reliable detected and distinguished by a correlator.

A zero base pattern may be either a watermark pattern orthogonal to the other base patterns or no watermarking at all, i.e. the audio signal is not altered in the block. The time delay between patterns that have a base pattern at the same position is calculated by correlating the signal with the corresponding base pattern. Since the length of a base pattern is known for the decoder in the receiving device, the delay between patterns that contain a same base pattern at different positions also can be calculated by subtracting or adding a multiple of the length of the base pattern to the measured time delay. Length of a base pattern means the duration for which the base pattern occurs in the audio and sound signal respectively. Pattern start with a synchronisation sequence, which is e.g. realized by a special base pattern or a combination of base patterns to enable a synchronisation between watermarks and patterns respectively, wherein individual means a specific watermark or pattern assigned to a specific content reproduced by one or more reproduction devices. That means that in the system an audio signal via embedder embedding a mark symbol in a pattern of a watermark individual for the reproduced content is distributed to loudspeakers of at least two reproduction devices and delays of arrival between said mark symbols or different mark symbols received from said loudspeakers in the receiving device are calculated to determine differences with regard to a synchronised reproduction or that different content is reproduced.

The recommended use of individual pattern assigned as watermark to the same content reproduced by at least two reproduction devices or different individual pattern assigned to different content reproduced by at least two reproduction devices requires advantageously low expenditure as existing devices can be used. Low processor power and power consumption are needed in the receiving device and a synchronisation of the content as well as controlling a second reproduction device to reproduce the same content as reproduced by a first reproduction device are user friendly and even automatically without any further user command and with low expenditure realised. Devices in general already available in a household as e.g. a smartphone, iPhone or phablet are applicable to perform the desired tasks by running a corresponding software application.

For a better understanding, the invention shall now be explained in more detail in the following description with reference to the figures. It is understood that the invention is not limited to the described embodiments and that specified features can also expediently be combined and/or modified without departing from the scope of the present invention as defined in the appended claims.

### BRIEF DESCRIPTION OF THE DRAWINGS

The accompanying drawings, which are included to provide a further understanding of the invention, and are incorporated in and constitute a part of this specification, illustrate embodiments of the invention and together with the description serve to explain the principles of the invention.

In the drawings:
- Fig. 1: shows a block diagram illustrating a media server, a wireless connected first media render, a second media render via line connected with the media server and a mobile device as a system to synchronise a reproduction of a same audio or audio and video content provided by the media server on at least two reproduction devices;
- Fig. 2: shows a floor plan illustrating several rooms with several media renderer and persons carrying a mobile device;
- Fig. 3: shows a block diagram of the mobile device;
- Fig. 4: shows a schematic illustrating the structure of a software application visualised on the display of the mobile device;
- Fig. 5: shows a flow diagram for embedding audio watermarks;
- Fig. 6: shows a flow diagram for detecting audio watermarks and
- Fig. 7: shows a block diagram of an audio watermark detector.

### DETAILED DESCRIPTION OF PREFERED EMBODIMENTS

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

Reference signs are unitary used in the drawings.

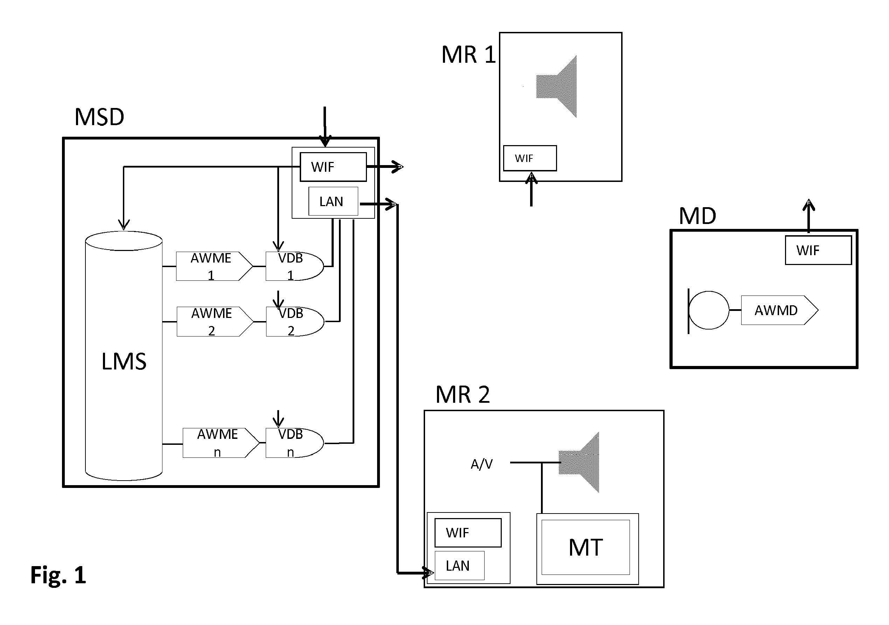

In the following the invention is explained with reference to Fig.1 illustrating a block diagram of a media server MSD, a first media renderer MR1 via a wireless interface WIF connected with media server MSD, a second media renderer MR2 via line as a local area network LAN connected with the media server MSD and a mobile device MD as a system to synchronise a reproduction of a same audio or audio and video content provided by the media server MSD on at least two reproduction devices as e.g. the first and the second media renderer MR1, MR2. A media renderer is e.g. an audio reproduction device as illustrated by the first media renderer MR1 having a loudspeaker or a media renderer is e.g. an audio and video reproduction device as illustrated by the second media renderer MR2 having in addition to a loudspeaker a monitor MT as e.g. a television device.

The media server MSD comprises a local media server LMS, audio watermark embedder AWME 1 to AWMEn for each reproduction device and media renderer respectively connectable to the media server MSD. Audio watermark embedder AWME 1 to AWMEn are provided for embedding different audio watermarks in audio streams of different audio content or for embedding different audio watermarks in audio streams of different audio and video content to reproduce audio content or audio and video content reproduced with a first reproduction device AUDIO or A/V also with a second reproduction device AUDIO or A/V. That means in the context of the invention that the reproduction device AUDIO or A/V is a reproduction device reproducing only audio signals or a reproduction device reproducing audio and video signals. Furthermore, audio watermark embedder AWME 1 to AWMEn are provided for embedding identical audio watermarks in separate audio streams of a same audio or audio and video content. Embedding identical audio watermarks in separate audio streams of a same audio or audio and video content is especially provided to synchronise a reproduction of the same audio or audio and video content reproduced by the at least two reproduction devices AUDIO or A/V. According to an embodiment of the invention configured only to reproduce audio content or audio and video content reproduced with the first reproduction device AUDIO or A/V also with second reproduction devices AUDIO or A/V, it is sufficient that different audio watermarks are embedded in audio streams of different audio content or embedded in audio streams of different audio and video content.

According to an embodiment of the invention configured only to synchronise a reproduction of the same audio or audio and video content reproduced by the at least two reproduction devices AUDIO or A/V it is sufficient that identical audio watermarks in separate audio streams of a same audio or audio and video content are embedded.

A further embodiment of the invention is configured to provide both kinds of synchronisation:
- launching a reproduction of content reproduced by a first reproduction device AUDIO or A/V on a second reproduction device AUDIO or A/V and
- synchronising a reproduction of the same audio or audio and video content reproduced by the at least two reproduction devices AUDIO or A/V.

That means that the term synchronisation shall be broadly understood in the context of the present invention as synchronisation is to compensate a delay between audio or audio and video content reproduced by at least two reproduction devices AUDIO or A/V and synchronisation also means that a second reproduction device AUDIO or A/V shall be controlled to reproduce the same content as reproduced by a first reproduction device AUDIO or A/V. In addition to audio watermark embedder AWME 1 to AWMEn, the media server MSD is provided with variable delay buffer VDB1 ...VDBn for compensating a delay between audio or audio and video content reproduced by at least two reproduction devices AUDIO or A/V. Variable delay buffer VDB1 ...VDBn are configured to change a start of transmitting audio or audio and video content to a media renderer and reproduction device AUDIO or A/V respectively. A variable delay buffer VDB1 ...VDBn is e.g. realised with a circular buffer or ring buffer with variable access as a useful tool for transmitting data between asynchronous processes. These buffers are quite common and are found in many embedded systems. Furthermore, a so-called trick mode is applicable to delay a transmission of digital audio data.

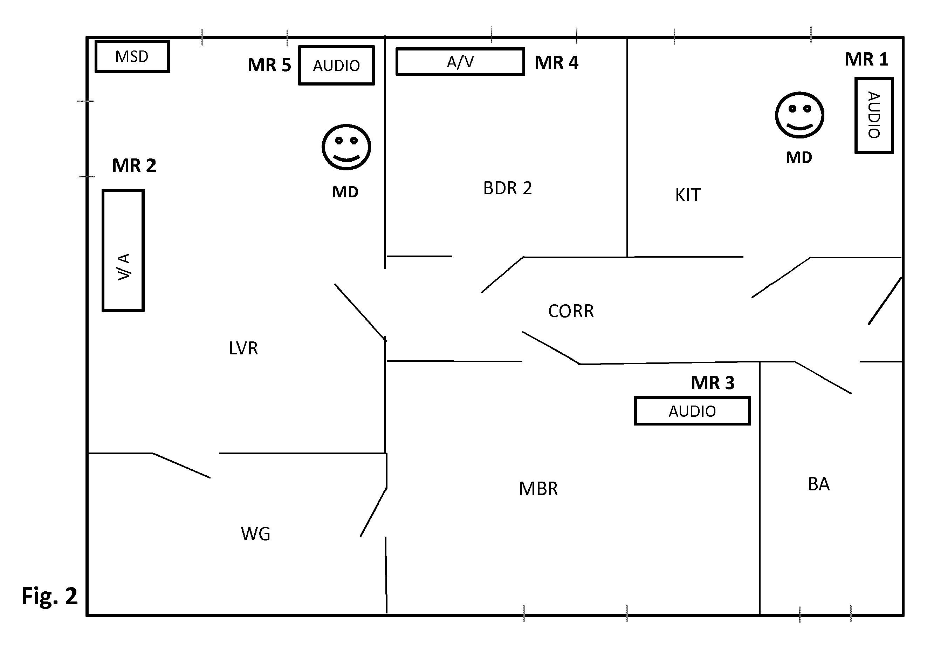

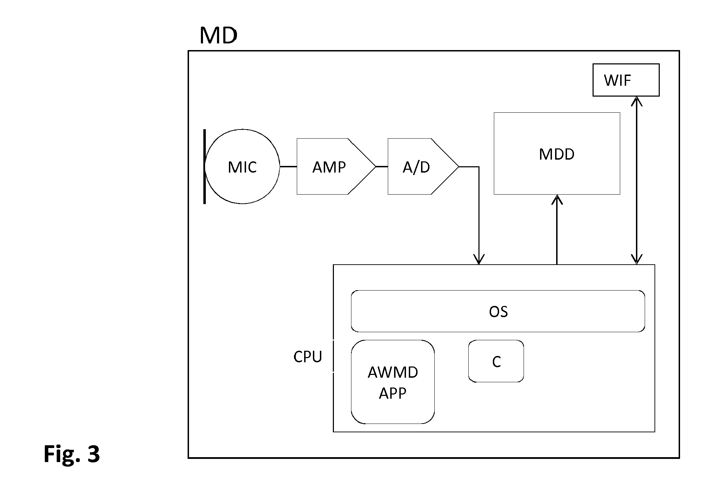

The system for synchronising a reproduction of a same audio or audio and video content provided by a media server on at least two reproduction devices as illustrated in Fig. 1 comprises furthermore a mobile device MD having at least a microphone, an audio watermark detector AWMD and a wireless interface WIF as well as further components as illustrated in more details in Fig. 3, and will be explained in more details below. The system enables the synchronization of different devices in multiple rooms including legacy devices and devices with less configuration capabilities as it will be shown in the following by relying on Fig. 2 illustrating a floor plan illustrating several rooms with several media renderer MR 1 to MR5 and persons illustrated by a schematic of smiling face carrying a mobile device MD. In general the configuration of reproduction devices AUDIO or A/V in multiple rooms to present the same content and to have the same delay is very time consuming and in many cases technically not feasible. In a setup where these devices play back content from a local media server MSD with embedded audio watermarks several problems are solved:
- Identify and change the content per reproduction device AUDIO or A/V,
- Identify the reproduction device AUDIO or A/V and location if known by the media server MSD,
- Measure and compensate the time delay between different audio playbacks.

The media server MSD has the ability to watermark the audio content per stream and reproduction device AUDIO or A/V differently. It is also able to change the presentation time per stream by delaying the audio/video data. This media server MSD could be for example implemented inside a set top box. The local media server MSD embeds an unique audio watermark in each presented stream so it can be identified by the audio watermark detector AWMD in the mobile device MD carried by the user. To detect the audio watermark embedded in the presented content a portable device or mobile device MD respectively like a tablet PC with a microphone or a smart phone is used. The mobile device MD communicates with the local media server LMS over a wireless network connection established via wireless interfaces WIF. The mobile device MD detects embedded audio watermarks permanently and without any user interaction and stores the information concerning the content stream presented in the current room. If the user changes the room, the audio watermark detector AWMD of the mobile device MD recognizes this move by detecting the audio watermark from the content presented in the new room and issues a command to the media server MSD to change the stream to the one of the former location. In absence of content in the new room as room 2 in the table below - no new or different detection results compared to former detections are available - the local media server LMS is directed to start presenting the stream of the former location in the new location upon user request as shown in the following table.

| Playback in room 1 | Playback in room 2 | Action in room 2 |
|---|---|---|
| Content A | Content B | Switch to content A |
| Content A | None | Start to present content A |
| Content A | Content A | Compensate delay of content A |

The delay compensation can be accomplished by detecting both audio watermark signals of the different rooms in parallel and the difference of the correlation peaks of the decoded audio watermark signals. The difference indicates delay information, which is provided to the media server MSD for equalizing a delay in receiving the audio or audio and video streams in the mobile device MD. A delay is in general introduced by different kinds of connections as e.g. wireless or cable network or for implementation related reasons like hardware or software buffers in the reproduction devices AUDIO or A/V or simply by the time needed to move from one to the other room. The delay compensation is done continuously as the mobile device MD does receive the watermarked audio signal continuously in the audio data of the presented streams. With this method there is no need for a special audible signal for measurement purpose to be presented. In one embodiment, the mobile device MD counts the number of equal detected watermarks so it can measure how long the user stays in a single location. Therefore, a time measurement unit C is provided for determining a duration for which content has been reproduced by a first reproduction device AUDIO or A/V and to avoid that watermarked content for a predetermined duration unintendedly received from a third reproduction device AUDIO or A/V will be reproduced by a second reproduction device AUDIO or A/V and to ensure that the content reproduced by the first reproduction device will be reproduced by the second reproduction device AUDIO or A/V.

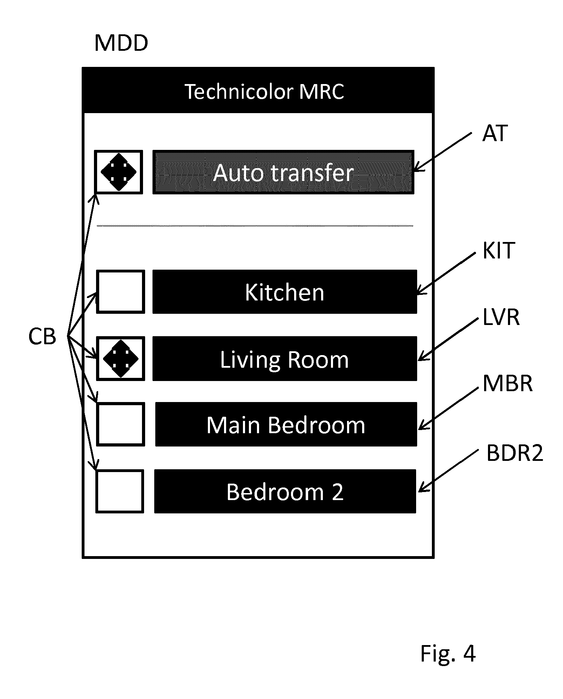

According to an embodiment of the invention, the method as described above is performed by using a software application APP executed by the mobile device MD having a display MDD configured as user interface illustrated in Fig. 4. The exemplary embodiment is configured to execute an automatic content presentation transfer or a manual content presentation transfer by enabling or disabling an input field CB of the user interface of the mobile device MD. Content presentation transfer or a so-called follow me feature means to reproduce content reproduced by a first reproduction device AUDIO or A/V also with a second reproduction device AUDIO or A/V. As an example for content presentation transfer we rely on the exemplary floor plan illustrated in Fig. 2, where a kitchen KIT, a second bedroom BDR2, a living room LVR, a main bedroom MBR and a bath BA can be entered from corridor CORR starting from the right side. A winter garden WG can be entered from the living room LVR as well as from the main bedroom MBR. The kitchen is equipped with a first media renderer MR1 being an audio reproduction device AUDIO, a fourth media renderer MR4 is available as an audio and video reproduction device A/V in the second bedroom BDR2, the living room LVR wherein e.g. also the media server MSD is located is equipped with a second media renderer MR2 being an audio and video reproduction device A/V and a fifth media renderer MR5 being an audio reproduction device AUDIO and a third media renderer MR3 being also an audio reproduction device AUDIO is arranged in the main bedroom MBR. In one embodiment, media renderers MR1 to MR5 and media server MSD are e.g. universal plug and play devices. Universal plug and play abbreviated as UPnP is a set of networking protocols that permits networked devices, to discover each other in the network and establish functional network services for data sharing, communications, and entertainment. Each device in the UPnP network obtains a domain name which can be translated as in the exemplary embodiment media renderer MR1 to MR5 are named according to rooms where they are located on the display MDD of the mobile device MD illustrated in Fig. 4. The user interface of the display MDD of the mobile device MD comprises in addition to input fields CB and indication fields indicating a room KIT, LVR, MBR, BDR2 where said one of the reproduction devices AUDIO or A/V is located an indication field for launching AT a reproduction of the same audio or audio and video content on a further audio reproduction device AUDIO or a further audio and video reproduction device A/V as well as a control element as an input field CB being a check box or a radio button. According to a preferred embodiment an automatic content presentation transfer or a manual content presentation transfer already in the setup procedure of the software application APP in the embodiment named Technicolor MRC can be selected as standard by enabling or disabling the input field CB for launching AT auto transfer. The abbreviation MRC stands for multi room control.

For an automatic content presentation transfer:
The user enabled in the user interface of the mobile device MD the checkbox auto transfer.
The user carrying the mobile device MD is e.g. located in kitchen KIT where content is presented and watermarked with a unique audio watermark provided by the first media renderer MR1. The mobile device MD continuously detects the embedded unique audio watermark. If the user now changes the location to the living room LVR, the mobile device MD will recognize this by a deviation in the detected unique audio watermark if content is reproduced which is different to the content reproduced in the kitchen KIT. If content is presented in the living room LVR, the watermark detector AWMD of the mobile device MD will detect a different audio watermark and the mobile device MD will direct the media server MSD to switch the content in the new location - the living room LVR - to the content corresponding to the audio watermark detected previously in the kitchen KIT - the former location. If no content is presented in the living room LVR, the audio watermark detector AWMD will not detect any new audio watermark. Only in that case, the user has to direct the local media server LMS to present the content of the former location by selecting the new location - living room LVR - on the user interface of the mobile device MD. Automatic content presentation transfer is therefore probably more interesting for single households not to disturb a further person already present in the living room LVR.

For a manual content presentation transfer:
The user disabled in the user interface of the mobile device MD the checkbox auto transfer.
The user carrying the mobile device MD is e.g. located in the kitchen KIT where content is presented and watermarked with a unique audio watermark provided via the first media renderer MR1. The mobile device MD continuously detects the embedded unique audio watermark. If the user now changes his/her location to the living room LVR, the mobile device MD will recognise this by a deviation in the detected unique audio watermark and according to an embodiment of the invention, the software application APP is such designed that for a predetermined time of e.g. 1-5 minutes by activating the checkbox auto transfer the mobile device MD will direct the media server MSD to switch the content in the new location - the living room LVR - to the content assosiated to the audio watermark detected previously in the kitchen KIT - the former location. That means that mobile device MD upon activating the checkbox auto transfer performs an automatic content presentation transfer as mentioned above.

According a further embodiment, the software application APP is designed such that at first the checkbox assigned to the room and reproduction device AUDIO or A/V respectively from which a content presentation transfer shall be performed has to be activated and then at arrival in the room to which the content presentation shall be transferred the checkbox assigned to this room has to be activated for a manual content presentation transfer. That means that in a first step, the unique audio watermark detected in a current room is recorded in the mobile device by activating the checkbox assigned to said room and in a second step, the checkbox assigned to the room to which the content presentation shall be transferred has to be activated.

Independent from an automatic or manual content presentation transfer, the software application APP is configured to synchronise without any user request content received in the mobile device MD from two reproduction devices AUDIO or A/V reproducing the same content.

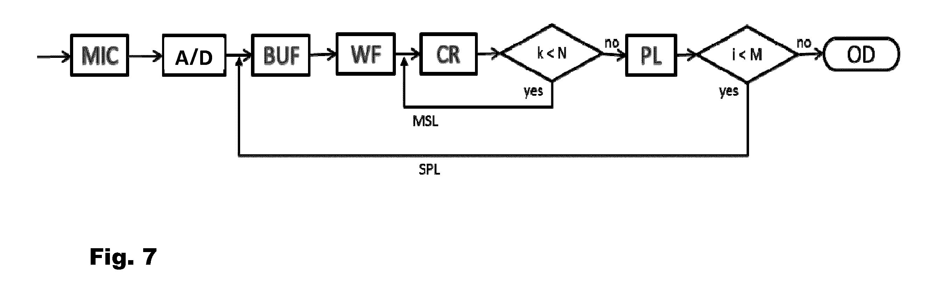

The mobile device MD which is configured for synchronising a reproduction of a same watermarked audio or watermarked audio and video content provided by a media server MSD on at least two reproduction devices AUDIO or A/V is illustrated in the block diagram of Fig. 3. The mobile device MD comprises a microphone MIC connected to an amplifier AMP for receiving watermarked audio signals. An analog/digital converter A/D is provided for converting the audio signals into digital values applied to a central processor unit CPU comprising the operating system OS of the mobile device MD, an software application APP as the audio watermark detector AWMD and a time measurement unit C is provided for determining a duration for which content has been reproduced by a first reproduction device AUDIO or A/V and to avoid that watermarked content for a predetermined duration unintendedly received from a third reproduction device AUDIO or A/V will be reproduced by a second reproduction device AUDIO or A/V and to ensure that the content reproduced by the first reproduction device will be reproduced by the second reproduction device AUDIO or A/V. The central processor unit CPU is connected with a wireless interface WIF to control upon user request with a first control signal a reproduction of a same audio or audio and video content provided by the media server MSD on a further reproduction device AUDIO or A/V or to control without a user request with a second control signal at least one variable delay buffer VDB of the media server MSD for synchronising a reproduction of the same audio or audio and video content provided by the media server MSD on at least two reproduction devices AUDIO or A/V. The mobile device MD comprises furthermore a display MDD which is connected with the central processor unit CPU for visualising the software application APP illustrated in Fig. 4. The structure of an exemplary audio watermark detector AWMD is illustrated in a block diagram in Fig.7 which shows that analog/digital converted audio signals captured with the microphone MIC are applied to a buffer BUF for temporally storing the audio samples and the buffer BUF via a whitening filter WF is connected to a correlator CR. The whitening filter WF applies a window and transforms blocks of audio samples into a frequency domain by applying a Discrete Fourier Transformation DFT, the magnitude of Fourier coefficients is set to 1 and the whitening filter WF transforms the blocks by applying an inverse Discrete Fourier Transformation IDFT back into the time domain and applies a window to provide overlap-add blocks for correlation. The correlator CR correlates the filtered audio blocks with all mark symbols N of the different audio watermarks in a mark symbol loop MSL and a connected pattern detector PL detects peaks and locations of symbols in symbol pattern in the number M of used symbol pattern and individual watermarks respectively for calculating corresponding time delays between arrivals of identical watermarks for providing information to generate the second control signal for synchronising a reproduction of the same audio or audio and video content provided by the media server MSD with at least two reproduction devices AUDIO or A/V. The pattern detector PL is configured as decider or so-called payload extractor for detecting peaks and locations of symbols in symbol pattern forming e.g. the individual or unique watermarks. The second control signal for synchronising a reproduction of the same audio or audio and video content is generated by an output unit OD connected to the pattern detector PL. The output unit OD supplies the wireless interface WIF of the mobile device MD and generates also the first control signal to launch a reproduction of a same audio or audio and video content on a further reproduction device AUDIO or A/V by evaluating the symbol patterns provided by pattern detector PL which identify a different content by different symbol pattern and watermarks respectively.

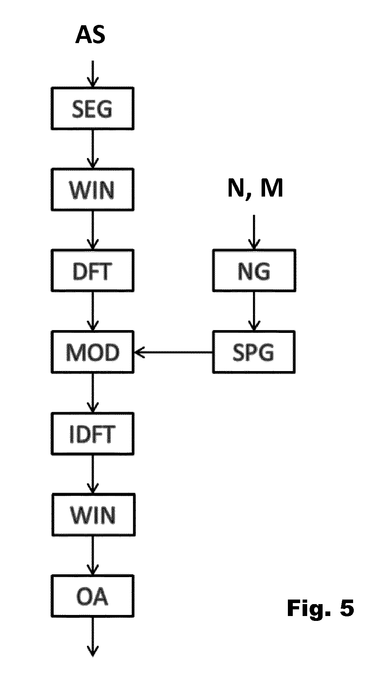

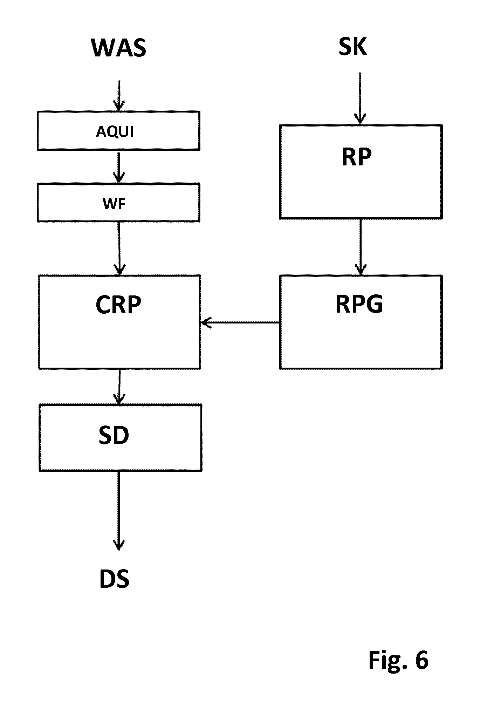

The method for embedding audio watermarks different and unique for each different audio stream provided by the media server MSD is illustrated by a flow chart in Fig. 5 which illustrates that the audio stream AS of audio or audio and video content at first is segmented SEG in overlapping blocks of samples and a sliding window is applied - a so-called windowing WIN - to avoid interruptions and to equalise overlapping parts of the blocks of audio signals. It is common practice in audio processing to apply a short-time Fourier transform to obtain a time-frequency representation of the signal so as to mimic the behaviour of the ear. The short-time Fourier transform consists of segmenting the input signal in B-samples long blocks using a sliding window with a hop-size of samples, and applying the Discrete Fourier Transformation DFT to each block after multiplication by an analysis window. This analysis phase results in a collection of DFT-transformed windowed blocks which is fed to the subsequent watermark embedding process comprising a modulation MOD with symbol patterns provided by a symbol pattern generator SPG supplied by a noise generator NG providing different pseudo random noise signals according to a number of mark symbols N and a number M of symbol pattern and individual watermarks respectively. Mark symbols N are with a specific seed generated pseudo random noise pattern and different symbol pattern and watermarks respectively are pattern generated with different mark symbols at the same or different position in a pattern or different symbol pattern are pattern generated with the same mark symbol at a different location in the pattern. The audio signal is modulated with symbol pattern in the Fourier domain of the audio signal and afterwards by an inverse Discrete Fourier Transformation IDFT reconstructed during a so-called synthesis phase. In a nutshell, the blocks are inverse-transformed and multiplied by a synthesis window that suppresses audible artefacts by fading out spectral discontinuities at frame boundaries. The resulting blocks are added together with the appropriate time offset and mapped back to the time domain. The combination of the segmenting-windowing-DFT in the analysis phase and the IDFT-windowing overlap-add in the synthesis phase is the so-called weighted overlap add technique abbreviated as WOLA. We will refer to the coefficients in between the analysis and synthesis phases as WOLA coefficients to explain a relation with regard to the watermark detection method illustrated by a flow diagram in Fig. 6 which starts with an acquisition AQUI of watermarked audio signals WAS with the microphone MIC, analog/digital converting in analog/digital converter A/D and buffering in the buffer BUF of the mobile device MD. The whitening filter WF processes audio samples stored in the buffer BUF to segment and window the samples in blocks, performs a transformation of the blocks into a frequency domain, setting a magnitude equal to 1 and a transformation back into the time domain with overlap-add blocks to provide a collection of audio blocks for correlation. That means that the whitening process performed in the whitening filter WF consists in mapping the signal to the WOLA domain, setting the magnitude of the WOLA coefficients to 1, and returning to the time domain.

To assess the presence of a symbol as a mark symbol or a zero base pattern, the audio watermark detector AWMD of the mobile device MD computes a cross-correlation score for all symbols so that a correlation lag is determined by the number of samples between the symbols to control a synchronization of audio streams providing the same content. Similar to the audio watermarks generated in the audio watermark embedder AWME 1 ... AWMEn of the media server MSD, reference patterns are generated by a reference pattern generator RPG in the audio watermark detector AWMD. Therefore, a random phase generator RP preferably controlled by a secret key SK is connected to the reference pattern generator RPG for a correlation of all reference pattern as generated by the audio watermark embedder AWME 1 ... AWMEn at the media server MSD side. That means that the correlator CR of the audio watermark detector AWMD of the mobile device MD correlates whitened audio signals with all reference pattern of the audio streams distributed to the reproduction devices AUDIO or A/V to perform a symbol detection SD so that a detected symbol DS is provided for further processing.

If a symbol is embedded in a received audio stream, the correlator CR exhibits a strong peak for a given correlation lag, whose position depends on the alignment of the signals provided from at least two reproduction devices AUDIO or A/V. The detection procedure of the watermarking system therefore first isolates the position and the amplitude of the correlation peak for each symbol, and then identifies which symbol exhibits the largest peak. If the peak is larger than some detection threshold in the pattern detector PL shown in Fig. 7, the symbol is decoded, otherwise the audio watermark detector AWMD reports that there is no watermark and nothing will be further executed.

Although an audio watermark is not perceptible by a human being, the delay between and the kind of watermark is detectable by correlating individual watermarks embedded in the sound signal provided by loudspeakers of reproduction devices, and a synchronisation of audio signals as well as controlling a second reproduction device to reproduce the same content as reproduced by a first reproduction device are user friendly realised. Although the present invention has been described in terms of the presently preferred embodiment, it is to be understood that such disclosure is not to be interpreted as limiting. Various alternations and modifications will no doubt become apparent to those skilled in the art after reading the above disclosure. Accordingly, it is intended that the appended claims be interpreted as covering all alternations and modifications as fall within the true spirit and scope of the claims.

## Claims

1. Method for synchronising a reproduction of a same audio or audio and video content provided by a media server (MSD) on at least two reproduction devices (AUDIO or A/V) by a mobile device (MD) wherein
audio watermarks are used
to synchronise a reproduction of the same audio or audio and video content reproduced by the at least two reproduction devices (AUDIO or A/V) or
the audio watermarks are used
to reproduce content reproduced by a first reproduction device (AUDIO or A/V) also with a second reproduction device (AUDIO or A/V).

2. The method according to claim 1, wherein the use of the audio watermarks to reproduce content reproduced by the first reproduction device (AUDIO or A/V) also with the second reproduction device (AUDIO or A/V) or a synchronised reproduction of the same audio or audio and video content reproduced by the at least two reproduction devices is performed upon initialisation or a switched on status of the mobile device (MD) without a further user request if the second reproduction device (AUDIO or A/V) reproduces content different to the content reproduced by the first reproduction device (AUDIO or A/V).

3. The method according to claim 1, wherein the use of the audio watermarks to reproduce content reproduced by the first reproduction device (AUDIO or A/V) also with the second reproduction device (AUDIO or A/V) is performed upon user request with the mobile device (MD).

4. The method according to claim 1 or claim 3, wherein the mobile device (MD) receives watermarked audio signals from the first reproduction device (AUDIO or A/V) and controls via a wireless interface (WIF) the media server (MSD) to reproduce audio or audio and video content reproduced with the first reproduction device (AUDIO or A/V) also with the second reproduction device (AUDIO or A/V) upon request and upon selection by a user of the mobile device (MD).

5. The method according to one of the claims 1 to 4, wherein identical audio watermarks are embedded in separate audio streams of a same audio or audio and video content by an audio watermark embedder (AWME1 ... AWMEn) in the media server (MSD) providing the same content for at least two reproduction devices (AUDIO or A/V) to synchronise a reproduction of the same audio or audio and video content reproduced by the at least two reproduction devices (AUDIO or A/V) and wherein different audio watermarks are embedded in audio streams of different audio content or embedded in audio streams of different audio and video content by an audio watermark embedder (AWME1 ... AWMEn) in the media server providing different content for at least two reproduction devices (AUDIO or A/V) to reproduce audio content or audio and video content reproduced with the first reproduction device (AUDIO or A/V) also with the second reproduction devices (AUDIO or A/V).

6. The method according to claim 5, wherein the reproduction of the same audio or audio and video content reproduced by the at least two reproduction devices (AUDIO or A/V) is synchronised with watermarked audio signals received by a microphone (MIC) of the mobile device (MD) and correlated in the mobile device (MD) controlling a delay of a variable delay buffer (VDB) in the media server (MSD) providing the same audio or audio and video content to the at least two reproduction devices (AUDIO or A/V) for a synchronised reproduction.

7. The method according to one of the claims 1 to 6, wherein the mobile device (MD) is used to synchronise a reproduction of the same audio or audio and video content reproduced by the at least two reproduction devices (AUDIO or A/V) by
receiving watermarked audio signals from the at least two reproduction devices (AUDIO or A/V),
correlating the watermarks of the at least two reproduction devices (AUDIO or A/V) with an audio watermark detector (AWMD) in the mobile device (MD) wherein a delay is determined and
generating a control signal indicating the time delay in the audio signals reproduced by the at least two reproduction devices (AUDIO or A/V) and transmitting the control signal from the mobile device (MD) to the media server (MSD) controlling with the control signal a variable delay buffer (VDB) in the media server (MSD) providing the same audio or audio and video content to the at least two reproduction devices (AUDIO or A/V) with a delay adjusted with the control signal applied to the variable delay buffer (VDB) for a synchronised reproduction of the same audio or audio and video content provided by the media server (MSD) and synchronously reproduced with the at least two reproduction devices (AUDIO or A/V).

8. The method according to one of the claims 1 to 7, wherein the method is performed by using a software application (APP) executed by the mobile device (MD).

9. System for synchronising a reproduction of a same audio or audio and video content provided by a media server (MSD) on at least two reproduction devices (AUDIO or A/V) by a mobile device (MD) comprising:
a microphone (MIC) for receiving watermarked audio signals reproduced by at least one loudspeaker of the at least two reproduction devices (AUDIO or A/V),
a microprocessor (CPU) designed for correlating watermarks in the watermarked audio signals received via the microphone (MIC) of the mobile device (MD) and generating dependent on the received watermarks a first or a second control signal applied to
a wireless interface (WIF) of the mobile device (MD) to launch upon user request with the first control signal a reproduction of a same audio or audio and video content provided by the media server (MSD) on a further reproduction device (AUDIO or A/V), or to control without a user request with the second control signal at least one variable delay buffer (VDB) of the media server (MSD) for synchronising a reproduction of the same audio or audio and video content provided by the media server (MSD) on the at least two reproduction devices (AUDIO or A/V).

10. The system according to claim 9, wherein the media server (MSD) has an audio watermark embedder (AWME1 ... AWMEn) for inserting audio watermarks at a predetermined time in separate audio streams for each of the at least two reproduction devices (AUDIO or A/V).

11. The system according to claim 9, wherein the media server (MSD) has a variable delay buffer (VDB) for a synchronised reproduction of the same audio or audio and video content provided by the media server (MSD) and reproduced with the at least two reproduction devices (AUDIO or A/V).

12. A mobile device (MD) configured for synchronising a reproduction of a same watermarked audio or watermarked audio and video content provided by a media server (MSD) on at least two reproduction devices (AUDIO or A/V).

13. The mobile device (MD) according to claim 12, comprising:
a microphone (MIC) for receiving watermarked audio signals reproduced by at least one loudspeaker of the at least two reproduction devices (AUDIO or A/V),
a microprocessor (CPU) designed for correlating watermarks in the watermarked audio signals received via the microphone (MIC) and for generating dependent on the received watermarks a first or a second control signal applied to
a wireless interface (WIF) of the mobile device (MD) to control upon user request with the first control signal a reproduction of a same audio or audio and video content provided by the media server (MSD) on a further reproduction device or to control without a user request with the second control signal at least one variable delay buffer (VDB) of the media server (MSD) for synchronising a reproduction of the same audio or audio and video content provided by the media server (MSD) on the at least two reproduction devices (AUDIO or A/V).

14. The mobile device (MD) according to one of the claims 12 to 13, comprising a display (MDD) for visualising a software application (APP) configured to synchronise a reproduction of a same audio or audio and video content provided by a media server (MSD) on the at least two reproduction devices (AUDIO or A/V).

15. The mobile device (MD) according to one of the claims 12 to 14, comprising a display (MDD) for visualising a software application (APP) configured for launching (AT) via a control element a reproduction of audio or audio and video content on a further reproduction device (AUDIO or A/V), the audio or audio and video content being said the same watermarked audio or audio and video content.

16. The mobile device (MD) according to claim 15, wherein the control element is an input field (CB) of the display (MDD) arranged next to an indication field indicating one of audio reproduction devices (AUDIO) or one of audio and video reproduction devices (A/V) or indicating a room (KIT, LVR, MBR, BDR2) where said one of the reproduction devices (AUDIO or A/V) is located.

17. The mobile device (MD) according to claim 15, wherein the control element is an input field (CB) of the display (MDD) arranged on the display (MDD) next to an indication field for launching (AT) a reproduction of the same audio or audio and video content on a further reproduction device (AUDIO or A/V).

18. The mobile device (MD) according to one of the claims 14 to 17, comprising a time measurement unit (C) provided for determining a duration for which content has been reproduced by a first reproduction device (AUDIO or A/V) and to avoid that watermarked content for a predetermined duration unintendedly received from a third reproduction device (AUDIO or A/V) will be reproduced by a second reproduction device (AUDIO or A/V) and to ensure that the content reproduced by the first reproduction device will be reproduced by the second reproduction device (AUDIO or A/V).

19. Media server (MSD) for synchronising a reproduction of a same audio or audio and video content provided by the media server (MSD) on at least two reproduction devices (AUDIO or A/V) comprising:
an audio watermark embedder (AWME1 ... AWMEn) for embedding audio watermarks in at least two audio streams and
a wireless interface (WIF) receiving a first or a second control signal transmitted from a mobile device (MD) for synchronising a reproduction of a same audio or audio and video content provided by the media server (MSD) on the at least two reproduction devices (AUDIO or A/V).

20. Media server (MSD) according to claim 19, wherein the audio watermark embedder (AWME1 ... AWMEn) is provided for embedding identical audio watermarks in audio streams of a same audio or audio and video content provided for at least two reproduction devices (AUDIO or A/V) to synchronise a reproduction of the same audio or audio and video content reproduced by the at least two reproduction devices (AUDIO or A/V).

21. Media server (MSD) according to claim 19, wherein the audio watermark embedder (AWME1 ... AWMEn) is provided for embedding different audio watermarks in audio streams of different audio or audio and video content provided for at least two reproduction devices (AUDIO or A/V) to reproduce audio content or audio and video content that is reproduced with a first reproduction device (AUDIO or A/V) also with a second reproduction device (AUDIO or A/V) upon user request with the mobile device (MD).

22. Media server (MSD) according to one of the claims 19 to 21, wherein a variable delay buffer (VDB1...VDBn) is provided for synchronising a reproduction of the same audio or audio and video content provided by the media server (MSD) on the at least two reproduction devices (AUDIO or A/V).
